# EUROPÄISCHE PATENTSCHRIFT

(11) **EP 1 229 967 B1**
(45) Veröffentlichungstag und Bekanntmachung des Hinweises auf die Patenterteilung: **28.07.2004**
(21) Anmeldenummer: 00984886.2
(22) Anmeldetag: 15.11.2000
(51) Int. Cl.: A62B 35/00

(54) **SICHERHEITSGÜRTEL**
SECURITY BELT
CEINTURE DE SECURITE

(30) Priorität: 15.11.1999 DE 29920015 U; 30.12.1999 DE 29922991 U
(43) Veröffentlichungstag der Anmeldung: 14.08.2002
(73) Patentinhaber: Hermann, Michael, 89269 Vöhringen (DE)
(72) Erfinder: Hermann, Michael, 89269 Vöhringen (DE)
(74) Vertreter: Kiessling, Christian
(86) Internationale Anmeldenummer: PCT/DE2000/003962
(87) Internationale Veröffentlichungsnummer: WO 2001/035791

(56) Entgegenhaltungen:
- CA-A- 2 183 473
- CH-A- 181 655
- DE-A- 19 729 645
- DE-U- 29 706 814
- US-A- 1 716 689
- US-A- 4 305 069
- US-A- 4 418 337
- US-A- 4 665 389
- US-A- 4 714 135
- US-A- 4 938 435
- US-A- 5 982 904

## Beschreibung

Die Erfindung betrifft einen Sicherheitsgürtel, insbesondere für den Personenschutz, der am menschlichen Körper anlegbar und befestigbar ist und der wenigstens zwei, das Anlegen und Abnehmen des Sicherheitsgürtels ermöglichende Gürtelteile und ein Befestigungselement zum sicheren und wieder lösbaren Verbinden der Gürtelteile aufweist.

Eine zunehmend größer werdende Anzahl von Menschen sieht sich einem steigenden Gefahrenpotential ausgehende von Bränden, insbesondere Hochhaus- bzw. Tunnelbränden oder auch Stürmen, Überflutungen, Lawinen oder erdbebenbedingten Naturkatastrophen von immer größer werdendem Ausmaß gegenüber. Außerdem besteht auch ein zunehmendes Sicherheitsbedürfnis an einem Schutz insbesondere gegen körperliche bzw. sexuelle Gewalt ausübende Straftäter.

Für derartige Zwecke sind eine Reihe von Sicherheitsgürteln für den Personenschutz bekannt geworden, wie beispielsweise die Abseitvorrichtung der US 4 938 435 A Dabei handelt es sich um Sicherheitsgürtel für Spezialaufgaben mit darauf abgestimmten speziellen Sicherheits- bzw. Sicherungsfunktinen. Diese Sicherheitsgürtel sind nur für ein relativ kurzzeitiges Tragen während des Sicherheitseinsatzes vorgesehen. Ein Tragen derartiger Sicherheitsgürtel über einen längeren Zeitraum, beispielsweise über einen ganzen Tag oder bei alltäglichen Arbeiten bzw. Tätigkeiten ist nicht oder nur mit erheblichen Einschränkungen möglich.

Demgemäß ist es eine Aufgabe der Erfindung, einen Sicherheitsgürtel zu schaffen, der die aus dem Stande der Technik bekannten Nachteile vermeidet.

Diese Aufgabe wird durch die Merkmale des Schutzanspruches 1, insbesondere dadurch gelöst, daß der Sicherheitsgürtel wenigstens eine Befestigungseinrichtung für vielfältige Sicherheits- bzw. Sicherungselemente aufweist, die mit zumindest einem der Gürtelteile fest verbunden ist, wobei der die Befestigungseinrichtung umfassende Sicherheitsgürtel in seinen Abmaßen und seinem Gewicht derart ausgebildet ist, daß ein Tragen des Sicherheitsgürtels auch über lange Zeiträume sowie bei Tätigkeiten des täglichen Lebens bei günstigem Tragekomfort und bei großer Bewegungsfreiheit möglich ist.

Dadurch ist es nun erstmals möglich, einen multifunktionellen Sicherheitsgürtel zu schaffen, der auch über längere Zeiträume bei alltäglichen geschäftlichen oder privaten Tätigkeiten getragen werden kann und der den Anforderungen sowohl an den Tragekomfort als auch an die Bewegungsfreiheit der den Sicherheitsgürtel tragenden Person gerecht wird.

Vorteilhafterweise ist die Befestigungseinrichtung fest mit wenigstens einem, vorzugsweise ein freies Ende aufweisenden Seil verbunden, das hinsichtlich seines Querschnittes und seiner Materialeigenschaften derart ausgebildet ist, daß insbesondere ein manuelles Ab- bzw. Aufrollen des Seils ermöglicht ist. Mit Hilfe dieses Seiles kann sich die den Gürtel tragende Person in Notfällen, beispielsweise bei Hausbränden oder Gefahrensituationen vorteilhaft abseilen, wobei das Seil aufgrund seiner Flexibilität bzw. Elastizität in einfacher Weise manuell abgerollt bzw. in die Länge gestreckt werden kann und auch nach einem Sicherheitseinsatz wieder einfach manuell aufgerollt bzw. in Schlingen gelegt werden und anschließend platzgünstig am Sicherheitsgürtel befestigt werden kann.

Zweckmäßigerweise sind zwei Seile vorgesehen. Dadurch lassen sich besonders günstige Stabilitätsverhältnisse beim Abseilen und eine günstige Handhabung erzielen. Im übrigen lassen sich dadurch die Sicherheitsreserven deutlich vergrößern oder lassen sich durch Verringerung der Seilquerschnitte noch günstigere Handhabungsverhältnisse erzielen.

Zweckmäßigerweise sind im angelegten Zustand des Sicherheitsgürtels jedem Seil sich unter Last ausbildende laterale Kraftübertragungspunkte zugeordnet, die einen eine stabile Lage des menschlichen Körpers ermöglichenden Abstand voneinander aufweisen.

Es versteht sich, daß das Seil hinsichtlich seines Querschnittes und seiner Materialeigenschaften dabei derart ausgebildet ist, daß es mit Sicherheit zumindest das Eigengewicht eines menschlichen Körpers, also des Trägers des Sicherheitsgürtel ohne zu zerreißen trägt.

Vorteilhafterweise ist die Befestigungseinrichtung mit wenigstens einem mit dem Seil koppelbaren und vorzugsweise mit einer Schleppkupplung ausgebildeten Bremselement zum Abbremsen des unter Last auf Zug beanspruchten Seils bzw. des Körpers fest verbunden. Dadurch läßt sich ein kontrolliertes und dosiertes Abbremsen beim Abseilen erzielen.

Dies kann weiter dadurch begünstigt werden, wenn das Bremselement mit einem Bremskraftübertragungsmittel zum Übertragen der Bremskraft auf das Seil versehen ist, das mit einem Einstellmittel zur variablen Einstellung der Höhe der Bremskraft versehen ist, wobei das Einstellmittel vorzugsweise manuell, insbesondere mit Hilfe eines Drehgebers einstellbar ist.

Von besonderem Vorteil ist es, wenn das Einstellmittel mit einem Mechanismus gekoppelt ist, der eine von bestimmten Körperstellungen und/oder von der Seilbeanspruchung abhängige Einstellung der Höhe der Bremskraft ermöglicht. Dadurch läßt sich eine vorteilhafte manuelle oder sogar automatische Steuerung der Bremskraft erzielen, was die Sicherheit beim Abseilen noch weiter vergrößert.

Weiterhin ist es von Vorteil, wenn die Befestigungseinrichtung fest mit einer Seilrolle zum Auf- bzw. Abrollen des Seils verbunden ist, die vorzugsweise ein das Aufrollen des Seils unterstützendes Rückstellelement, insbesondere eine Drehfeder aufweist. Dadurch lassen sich besonders günstige Platzverhältnisse unter Erhalt einer hohen Bewegungsfreiheit sowie eine günstige manuelle Handhabung beim Auf- bzw. Abrollen des Seils erzielen. Dabei ist es besonders vorteilhaft, wenn die Drehachse der Seilrolle senkrecht zum Befestigungselement bzw. zur Längsachse des Körpers bzw. des Rumpfes der Gürtelträgers angeordnet ist. Dadurch lassen sich günstige Einbauverhältnisse in Verbindung mit einer besonders flachen Bauweise der Befestigungseinrichtung erzielen, so daß der Gürtelträger nicht bzw. nur unwesentlich in seiner Bewegungsfreiheit eingeschränkt wird.

Zweckmäßigerweise ist der Sicherheitsgürtel mit einem Befestigungselement zur Befestigung eines Kraftübertragungsglieds, wie beispielsweise einem Seil, einer Kette oder einer Stange, fest verbunden und vorzugsweise derart befestigt, daß das Befestigungselement im geschlossenen Zustand des Sicherheitsgürtels in einem Bereich des Sicherheitsgürtels angeordnet ist, der einem bzw. mehreren sich unter Last ausbildenden Kraftangriffspunkt bzw. Kraftangriffspunkten des bzw. der Seile gegenüberliegt. Wenn das Befestigungselement also beispielsweise als Öse ausgebildet ist, kann der Sicherheitsgürtel auch als Haltevorrichtung bzw. zur sicheren Befestigung von Gegenständen benutzt werden.

Von besonderem Vorteil ist es, wenn die Befestigungseinrichtung mit einem manuell und/oder wenigstens einem Sensor gesteuerten, vorzugsweise optische, akustische, elektrische und/oder elektromagnetische Alarmsignale aussendenden Signalgeber fest verbunden ist. Dadurch kann der Gürtelträger in Notsituationen vorteilhaft auf sich aufmerksam machen oder kann durch manuelle Betätigung des Signalgebers einen Warneffekt erzielen, der potentielle Straftäter von einer Straftat abhalten und in die Flucht schlagen kann. Weil es in derartigen Notsituationen auch vorkommen kann, daß der Träger des Sicherheitsgürtel das Bewußtsein verliert oder aus anderen Gründen nicht mehr in der Lage ist, den Signalgeber manuell zu betätigen, können in vorteilhafter Weise mittels der automatischen Sensorsteuerung des Signalgebers ein oder mehrere geeignete Alarmsignale ausgesandt werden. Hierzu kann der Sensor zweckmäßigerweise als Sensor zur Erfassung von Umgebungsbedingungen, wie der Temperatur, der Luftfeuchte, der Luftzusammensetzung, des Rauchgehalts und/oder dergleichen ausgebildet sein. Vorteilhafterweise sind mehrere derartiger Sensoren oder multifunktionelle Sensoren verwendbar, so daß mit Hilfe des Sicherheitsgürtels in vielerlei Notsituationen abhängig von den jeweiligen Umgebungsbedingungen wie großer Hitze oder Kälte, beim Aufenthalt im Wasser und/oder bei Bildung von Rauch oder schädlichen Gasen automatisch ein geeignetes Alarmsignal ausgesandt werden kann. Dieses ermöglicht in günstiger Weise die schnelle Ortung des in einer Notsituation befindlichen Gürtelträgers, wobei die Alarmsignale vorteilhafterweise derart ausgebildet sind, daß sie über eine Funkpeilung oder dergleichen anpeilbar sind.

Von besonderem Vorteil ist es, wenn die Befestigungseinrichtung fest mit einem elektrischen Alarmsystem und einer autarken Stromquelle zur Versorgung des Alarmsystem mit elektrischem Strom verbunden ist, wobei das Alarmsystem vorteilhafterweise mit einem Sender und/oder einem Empfänger ausgebildet ist. Dadurch läßt sich eine besonders günstige und schnelle Ortung des in Notfall geratenen Gürtelträgers erreichen. Eine Ortung mit einer noch größeren Präzision läßt sich erreichen, wenn das Alarmsystem derart ausgebildet ist, daß es eine satelitengestützte Ortung des Sicherheitsgürtels ermöglicht, wobei das Alarmsystem vorzugsweise als GPS-System gestaltet ist. In gleicher Weise wie die Signalgeber 33, 34, 35, 36, 37, kann auch das Alarmsystem 40 sensorgesteuert oder durch manuell, hier mittels der Betätigungstaste 68, betätigt werden.

Ferner ist es zweckmäßig, wenn die Befestigungseinrichtung mit einem manuell betätigbaren Sicherheitshilfselement zum Einschlagen von Glasscheiben lösbar oder unverlierbar verbunden ist. Dadurch lassen sich in günstiger Weise Fluchtwege durch Zerstörung von Beglasungen beispielsweise Fenster und Türscheiben, schaffen. Dies ermöglicht eine schnelle Fluchtmöglichkeit für den bzw. die Betroffenen.

Zweckmäßigerweise kann der Sicherheitsgürtel eine Aufnahmevorrichtung zur Aufnahme einer vorzugsweise mit Aluminium ausgebildeten Sicherheitsdecke aufweisen. Hierzu sind beispielsweise mit Aluminium beschichtete Sicherheitsdecken geeingnet, die einen vorteilhaften Hitzeschutz und/oder Schutz gegen Unterkühlung ermöglichen.

Es ist ferner zweckmäßig, wenn der Sicherheitsgürtel eine im angelegten Zustand nicht sichtbare Sicherungsgravur zur Personenidentifikation aufweist. Dadurch sind die persönlichen Daten gegenüber unbefugten Dritten vorteilhaft geschützt, stehen jedoch im Notfall autorisierten Personen zur schnellen Identifikation des Betroffenen zur Verfügung.

Von besonderem Vorteil ist es, wenn die Befestigungseinrichtung eine Einrichtung zur drahtlosen Übermittlung von Sprache, insbesondere ein Funktelefon aufweist. Dadurch haben der Träger des Sicherheitsgürtels und ggf. auch Hilfspersonen die Möglichkeit sowohl schnell Hilfe anzufordern als auch dabei detaillierte Angaben über die betroffene Person, die Art der Notsituation, den Aufenthaltsort und dergleichen zu machen. Dies ermöglicht einen noch effizienteren Hilfseinsatz.

Zweckmäßigerweise umfaßt die Einrichtung zur drahtlosen Übermittlung von Sprache eine Freisprecheinrichtung, die eine Sprachübermittlung vorzugsweise über eine Sprachsteuerung ermöglicht. Dadurch ist eine besonders einfache Kommunikation ermöglicht, während der Gürtelträger die Hände vorteilhaft für andere Zwecke einsetzen kann.

Es ist ferner zweckmäßig, wenn die Freisprecheinrichtung mit der Befestigungsvorrichtung elektrisch verbindbar gestaltet ist und hierzu einen Kontaktstecker aufweist, der passend zu einem elektrischen Gegenkontaktstecker der Befestigungsvorrichtung ausgebildet ist. Dadurch kann die Freisprecheinrichtung wahlweise mitgeführt werden und kann bedarfsweise an anderer Stelle eingesetzt werden, beispielsweise in einem Kraftfahrzeug.

Alternativ zu und/oder in Kombination mit der Sprachsteuerung kann die Einrichtung zur drahtlosen Übermittlung von Sprache mit Hilfe einer vorzugsweise auf der Befestigungseinrichtung bzw. einem mit dieser verbundenen Abdeckteil angeordneten Tastatur betätigbar sein, wobei eine numerische Tastatur bevorzugt ist.

Es ist außerdem zweckmäßig, wenn die Befestigungseinrichtung ein vorzugsweise separates Fach für die lösbar mit dieser verbundenen Freisprecheinrichtung aufweist. Dies ermöglicht ein einfaches Einsetzen bzw. Entnehmen der Freisprecheinrichtung und günstigen Schutz gegen Umgebungseinflüsse wie Feuchtigkeit oder Flüssigkeiten.

Von besonderem Vorteil ist es, wenn die Sicherungs- bzw. Sicherheitselemente, insbesondere das Seil, der Sensor, der Signalgeber, das Alarmsystem, die Stromquelle und/oder die Sicherheitsgravur derart an der Befestigungseinrichtung befestigt sind, daß sie nicht ohne Zerstörung entfernbar sind. Dadurch wird ein zusätzlicher Schutz gegenüber einem unbefugten Entfernen derartiger Sicherungs- bzw. Sicherheitselemente erreicht.

Vorteilhafterweise sind die Befestigungseinrichtung bzw. ein mit dieser fest verbundener Abdeckteil derart gestaltet, daß sie im angelegten Zustand des Sicherheitsgürtels das Befestigungselement derart überdecken, daß ein Öffnen des Sicherheitsgürtels durch unbefugte Dritte nicht ohne Zerstörung der Trägereinrichtung oder des Abdeckteils möglich ist. Dadurch lassen sich zusätzliche Schutzmöglichkeiten schaffen, die ein Öffnen bzw. Abnehmen des Sicherheitsgürtels durch unbefugte Dritte nicht bzw. nur größeren Schwierigkeiten ermöglichen.

Hierzu sind die Befestigungseinrichtung bzw. der Abdeckteil zweckmäßigerweise mit einem mittels eines einstellbaren Sicherheitscodes betätigbaren Sicherheitsmechanismus derart mit dem Befestigungselement gekoppelt, daß ein Öffnen des Sicherheitsgürtels nur mit Hilfe des voreingestellten Sicherheitscodes möglich ist. Dadurch lassen sich in günstiger Weise die vorstehenden Schutzmöglichkeiten erzielen, während es dem Träger des Sicherheitsgürtels in einfacher Weise durch Eingabe des richtigen Sicherheitscodes ein Öffnen und Ablegen des Sicherheitsgürtels insbesondere ohne Verwendung zusätzlicher Hilfsmittel, wie Schlüssel oder dergleichen, möglich ist. Dies läßt sich beispielsweise dadurch erreichen, daß der Sicherheitscode mit Hilfe einer im angelegten Zustand des Gürtels von außen zugänglichen, vorzugsweise auf der Befestigungseinrichtung bzw. dem Abdeckteil angeordneten Tastatur eingebbar sind.

Zweckmäßigerweise sind die Sicherungs- bzw. Sicherheitselemente, insbesondere das Seil, der Sensor, der Signalgeber, das Alarmsystem, die Einrichtung zur drahtlosen Übermittlung von Sprache und/oder die Tastatur gegen Flüssigkeiten geschützt bzw. abgedichtet angeordnet, so daß deren einwandfreie Funktion auch unter Einwirkung von Flüssigkeiten, wie Regen oder Spritzwasser oder beim Schwimmen im Wasser gewährleistet sind.

Zweckmäßigerweise ist die Befestigungseinrichtung platten- bzw. kastenartig ausgebildet. Dadurch ist eine günstige Anordnung und Befestigung der Sicherheits- bzw. Sicherungselemente bei günstigem Gewicht und vorteilhaften, kompakten Abmaßen möglich.

Vorteilhafterweise ist der Sicherheitsgürtel als Hüftgürtel ausgebildet. Dies ermöglicht ein einfaches normales Anlegen und eine Verwendung insbesondere als Hosengürtel. Dadurch sind ein günstiger Tragekomfort und günstige Anordnungsmöglichkeiten für die Befestigungseinrichtung mit den Sicherheits- bzw. Sicherungselementen ermöglicht, so daß keine oder eine nur unwesentliche Beeinträchtigung der Bewegungsfreiheit des Gürtelträgers auftritt. Dabei sind vorteilhafterweise die Befestigungseinrichtung und die mit ihr fest verbundenen Sicherheits- bzw. Sicherungsmittel im angelegten Zustand des Sicherungsgürtels ventral bzw. abdominal angeordnet. Dies ermöglicht einen besonders vorteilhaften Tragekomfort bei günstiger Anordnung und Bedienbarkeit der Sicherheits- bzw. Sicherungsmittel. Durch diese Anordnung ist auch insbesondere bei Tätigkeiten des täglichen Lebens eine maximale Bewegungsfreiheit für den Gürtelträger ermöglicht.

Von besonderem Vorteil ist es, wenn die Befestigungseinrichtung und die mir ihr fest verbundenen Sicherheits- bzw. Sicherungsmittel im angelegten Zustand des Sicherungsgürtels eine gemeinsame Einheit ausbilden. Dadurch lassen sich sämtliche Sicherheits- bzw. Sicherungsmittel besonders vorteilhaft anordnen und bedienen. Bedingt durch die Ausbildung einer gemeinsamen Einheit wird eine gewichtsoptimierte Gestaltung bei günstigen Bewegungsverhältnissen für den Gürtelträger erreicht. Außerdem wird dadurch eine geschützte und sichere Anordnung der Sicherheits- bzw. Sicherungselemente bei besonders günstigem Design des Sicherheitsgürtels ermöglicht.

Vorstehende Maßnahmen tragen sowohl einzeln als auch in Kombination untereinander zur Erfüllung der einem gesteigerten Sicherheitsbedürfnis genügenden Anforderungen durch multifunktionelle Sicherheitsfunktionen bei und ermöglichen einen günstigen Tragekomfort und eine nahezu uneingeschränkte Bewegungsfreiheit auch beim Tragen über einen längeren Zeitraum, insbesondere bei vielerlei Tätigkeiten des täglichen Lebens, sei es im beruflichen oder auch im privaten Bereich.

Weitere Merkmale, Gesichtspunkte und Vorteile der Erfindung sind dem nachfolgenden, an Hand der Figuren abgehandelten Beschreibungsteil entnehmbar.

Ein bevorzugtes Ausführungsbeispiel der Erfindung ist nachfolgend anhand der Figuren beschrieben.

Es zeigen:
- Fig. 1: eine schematische Schrägansicht des Sicherheitsgürtels mit der die Sicherheits- bzw. Sicherungselementen aufweisenden Befestigungseinrichtung;
- Fig. 2: eine vergrößerte Teil-Schrägansicht des Sicherheitsgürtels im Bereich der Befestigungseinrichtung mit Teilschnitten zur besseren Veranschaulichung der Sicherheits- bzw. Sicherungselemente in schematischer Darstellung.

Der Sicherheitsgürtel 20 weist die das Anlegen und Abnehmen des Sicherheitsgürtels 20 ermöglichenden beiden Gürtelteile 21 und 22 sowie die Befestigungseinrichtung 25 für vielfältige Sicherheits- bzw. Sicherungselemente auf. Die Befestigungseinrichtung 25 ist derart gestaltet, daß sie im geöffneten Zustand des Sicherheitsgürtels 20 nur an einem der Gürtelteile, beispielsweise am Gürtelteil 22, befestigt ist. Der andere Gürtelteil 21 ist beispielsweise mit einem mit einer Ausnehmung versehenen plattenförmigen Kupplungsteil verbunden. Dieser Gürtelteil 21 kann im Bereich des freien Endes 76 der Befestigungseinrichtung 25 unterhalb dieser entlanggeführt bzw. in diese hineingesteckt werden und kann anschließend mit einem mit der Sicherheitsschließe 42 verbundenen, in den Figuren nicht näher dargestellten Befestigungselement 50, gekoppelt werden. Dieses ist vorzugsweise mit ein- bzw. ausrastbaren Rastelementen zum einfachen und schnellen manuellen Anlegen bzw. Abnehmen des Sicherheitsgürtels 20 gestaltet, beispielsweise nach Art eines Kupplungsverschlusses, wie er bei Flugzeuggurten Verwendung findet. Zum Sicheren, jedoch wieder lösbaren Verbinden der Gürtelteile 21, 22 wird beispielsweise der plattenförmige Kupplungsteil in einen seine Aufnahme und Verrastung ermöglichenden Gegen-Kupplungsteil hineingesteckt, der ebenfalls in der Figuren nicht näher dargestellt ist.

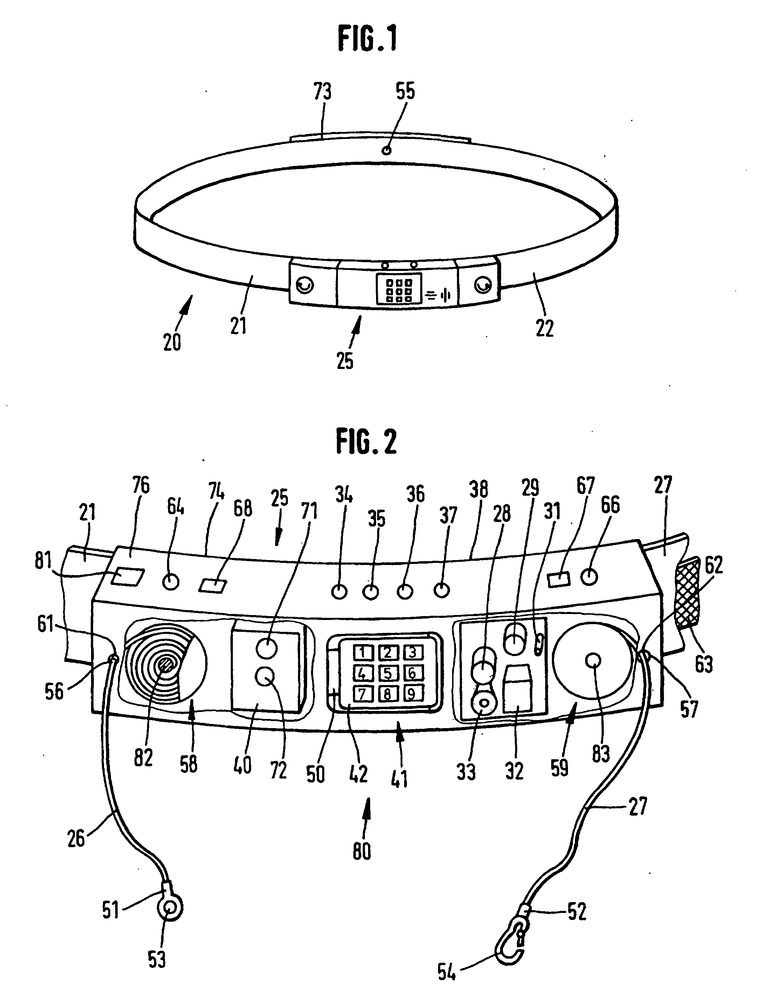

In dem in den Fig. 1 und 2 gezeigten bevorzugten Ausführungsbeispiel ist die Befestigungseinrichtung 25 bzw. die Trägereinrichtung für die Sicherheits- bzw. Sicherungselemente als ein kompaktes und einheitliches Bauelement gestaltet, wobei die mit ihr fest verbundenen Sicherheits- bzw. Sicherungsmittel im angelegten Zustand des Sicherungsgürtels 20 eine gemeinsame Einheit 80 ausbilden. Dadurch läßt sich die Befestigungseinrichtung 25 einfach, kompakt und kostengünstig herstellen und es ist ein besonders vorteilhafter Schutz gegen mechanische, chemische und chemisch/physikalische oder physikalische Eingriffe erzielbar. Ferner ermöglicht die vorteilhafte Anordnung und Gestaltung der Einheit 80 einen günstigen Tragekomfort bei geringerem Gesamtgewicht des Sicherheitsgürtels 20 in Verbindung mit einem maximalen Erhalt an Bewegungsfreiheit für den Träger des Sicherheitsgürtels 20.

Gemäß einer alternativen Ausführungsform des Sicherheitsgürtels 20 können auch beide Gürtelteile 21, 22 fest mit jeweils einer Befestigungseinrichtung verbunden sein, wobei eine der Befestigungseinrichtungen mit einem geeignet gestalteten Abdeckteil zur sicheren Überdeckung des das sichere, wiederlösbare Verbinden der Gürtelteile 21, 22 ermöglichenden Befestigungselements 50 ausgestaltet ist.

Als wesentliche Sicherheits- bzw. Sicherungselemente sind die Seile 26, 27, die Sensoren 28 bis 32, die Signalgeber 33 bis 37, das Alarmsystem 40, die Tastatur 41, die Sicherheitsschließe 42 und die vorzugsweise auf der Rückseite der Sicherheitsschließe 42 angeordnete Sicherheitsgravur vorgesehen.

Die Seile 26, 27 weisen jeweils die freien Enden 51, 52 auf, an denen geeignet gestaltete Befestigungselemente, hier in der Form der Öse 53 bzw. des Karabinerhakens 54 angeordnet und fest mit dem jeweiligen Seil 26 bzw. 27 verbunden sind. Die Seile 26, 27 können in vielfältiger Weise genutzt werden. Sie dienen insbesondere dem Träger des Sicherheitsgürtels 20 dazu, sich in Notsituationen, beispielsweise bei einem Hausbrand, abseilen zu können und weisen hierzu eine bevorzugte Länge von beispielsweise 50 m auf. Mit Hilfe der Seile 26, 27 kann der Träger des Sicherheitsgürtels 20 jedoch auch weiteren Personen das Abseilen ermöglichen oder können an den Seilen befestigte Gegenstände gesichert werden. Ferner ist es möglich den Sicherheitsgürtel als Haltevorrichtung oder zur sicheren Befestigung von Gegenständen zu benutzen. Hierzu werden vorzugsweise bei geschlossenem Zustand des Sicherheitsgürtels 20 an dem rückseitig bzw. relativ zur Befestigungseinrichtung 25 gegenüberliegenden Befestigungselement 55, beispielsweise einer Öse, geeignete Kraftübertragungsglieder, beispielsweise Seile, Stangen, Ketten oder dergleichen befestigt. Auf diese Weise können mit Hilfe des Sicherheitsgürtels 20 selbst und/oder mit Hilfe der Seile 26 und 27 die Gegenstände gesichert werden.

Die Seile 26, 27 sind hinsichtlich ihrem Querschnitt und ihrer Materialeigenschaften derart ausgebildet, daß insbesondere ein manuelles Ab- bzw. Aufrollen der Seile 26, 27 ermöglicht ist. Jedes Seil 26, 27 ist durch eine in der kastenförmig ausgebildeten Befestigungseinrichtung 25 vorgesehene Öffnung 56, 57 geführt und im Inneren der Befestigungseinrichtung 25 auf den Seilrollen 58, 59 ab- bzw. aufrollbar angeordnet. Die Drehachsen 82, 83 der Seilrollen 58, 59 sind normal zum Grundkörper 38 der Befestigungseinrichtung 25 ausgebildet bzw. sind im angelegten Zustand des Sicherheitsgürtels 20 etwa normal zur Längsachse des Körpers bzw. Rumpfes des Gürtelträgers angeordnet. Dadurch lassen sich die Seilrollen 58, 59 besonders platzsparend in der Befestigungseinrichtung 25 anordnen. Dies ermöglicht eine besonders flache Bauweise der Befestigunseinrichtung 25, so daß sich günstige Bewegungsmöglichkeiten ohne wesentliche Behinderung des Gürtelträgers erzielen lassen. Die sich insbesondere unter Last ausbildenden Kraftübertragungspunkte 61 und 62 sind lateral voneinander beabstandet angeordnet, so daß beim Abseilen eine stabile Lage des menschlichen Körpers des Gürtelträgers erzielbar ist.

Es versteht sich, daß die Seile 26, 27 hinsichtlich ihrer Querschnitte und ihrer Materialeigenschaften derart gestaltet sind, daß sie mit Sicherheit zumindest das Eigengewicht des menschlichen Körpers des Gürtelträgers ohne zu zerreißen mit Sicherheit zu tragen in der Lage sind. Gemäß einer bevorzugten Ausführungsform weist der Sicherheitsgürtel 20 die verstärkende Materialschicht 63 auf, die vorzugsweise als verstärkende Kernschicht, insbesondere in der Form eines Stahlmantels und/oder unter Verwendung von Hochleistungskunststoffen ausgebildet sind.

Um ein kontrolliertes bzw. dosiertes Abbremsen unter Last zu ermöglichen, ist die Befestigungseinrichtung 25 mit wenigstens einem mit den Seilen 26, 27 koppelbaren Bremselement ausgestaltet, das vorzugsweise mit einer Schleppkupplung ausgebildet ist.

Dabei ist vorzugsweise das Bremselement mit einem Bremskraftübertragungsmittel zur Übertragung der Bremskraft auf die Seile 26, 27 versehen, das mit den Einstellmitteln 63, 66 zur variablen Einstellung der Höhe der Bremskraft versehen ist. Die Einstellmittel 64, 66 sind manuell mit Hilfe von Drehgebern einstellbar. Die Einstellmittel 64, 66 können anstelle der in Fig. 2 gekennzeichneten Positionen auch an anderen geeigneten, leicht bedienbaren Positionen, beispielsweise an der Vorderseite der Befestigungseinrichtung 25, insbesondere in dem den Seilrollen 58, 59 zugeordneten Bereichen angeordnet sein.

Mit der Befestigungseinrichtung 25 sind die Sensoren 28, 29, 31, 32 fest verbunden. Dabei ist der Sensor 28 als Feuchtefühler, der Sensor 29 als Fühler zur Erfassung der Luftzusammensetzung, der Sensor 31 als Temperaturfühler und der Sensor 32 als Rauchmelder ausgebildet. Mit Hilfe der Sensoren 28, 29, 31, 32 werden abhängig von vorgebbaren Grenzwerten die Signalgeber 33, 34, 35, 36, 37 gesteuert. Der Signalgeber 33 ist als Lautsprecher zur Aussendung von akustischen Signalen ausgestaltet. Die Signalgeber 34, 35, 36, 37 erlauben es, optische, elektrische, elektromagnetische und/oder andere geeignete Alarmsignale auszusenden, um den Gürtelträger selbst und/oder dritte Personen in geeigneter Form über den durch die Sensoren 28, 29, 31, 32 erfaßten Umgebungsbedingungen abhängig von bestimmten Notfallsituationen zu informieren, um Hilfe zu rufen oder in geeigneter Form zu warnen. Die Signalgeber 33, 34, 35, 36, 37 können jedoch auch manuell betätigt werden, beispielsweise mit Hilfe der Betätigungstaste 67 (Fig. 2). Die Sensoren 28, 29, 31, 32 und die Signalgeber 33, 34, 35, 36, 37 lassen sich vergleichsweise klein und leicht gestalten, so daß sich günstige Platz- und Gewichtsverhältnisse erzielen lassen.

Um dem in Not geratenen Gürtelträger möglichst schnell und effizient helfen zu können, ist abhängig von der gegebenen Notfallsituation eine besonders präzise Ortung des den Sicherheitsgürtel 20 tragenden Menschen erforderlich. Hierzu ist insbesondere das elektrische Alarmsystem 40 vorgesehen, das mit einer in den Figuren nicht gezeigten autarken Stromquelle gekoppelt ist. Es versteht sich, daß die übrigen Signalgeber 33, 34, 35, 36, 37 sowie die Sensoren 28, 29, 31, 32 ebenfalls mit einer geeigneten autarken Stromquelle beispielsweise in der Form einer wiederaufladbaren Batterie oder auch mit einem manuell betätigbaren Generator mit Strom versorgt werden können, wobei letzterer insbesondere in Situationen, in denen sich die Batterie entleert hat bzw. entladen ist, dennoch der Strom zum Betrieb der vorstehenden Elemente erzeugt werden kann. Das Alarmsystem 40 ist mit dem Sender 71 und dem Empfänger 72 gestaltet. Der Sender ermöglicht insbesondere die Aussendung von anpeilbaren Signalen. Der Empfänger ermöglicht es dem Träger des Sicherheitsgürtels 20, die Alarmsignale zu empfangen und vorzugsweise die in Not geratenen dritten Personen anzupeilen. Eine besonders präzise Anpeilung bzw. Ortung des Trägers des Sicherheitsgürtels 20 läßt sich dadurch erzielen, daß das Alarmsystem 40 derart ausgebildet ist, daß es seine satelitengestützte Ortung ermöglicht. Demgemäß ist das Alarmsystem 40 vorzugsweise als GPS-System, das heißt als Globales-Positions-Erfassungssystem ausgebildet.

Um in bestimmten Notsituationen schnell einen wirksamen Schutz gegen Hitzeentwicklung, beispielsweise bedingt durch Brände zu ermöglichen, oder einen Schutz gegen Ab- bzw. Unterkühlung zu gewährleisten, ist der Sicherheitsgürtel 20 mit der Aufnahmevorrichtung 73 versehen. An bzw. in dieser ist eine vorzugsweise mit Aluminium beschichtete oder aus Aluminium bestehende Sicherheitsdecke angeordnet.

Die Befestigungseinrichtung 25 selbst ist mit wenigstens einem vorzugsweise plattenförmig ausgebildeten Grundkörper 38 gestaltet, der fest mit einem der Gürtelteile 21, 22 verbunden ist. Zur sicheren Aufnahme der Sicherheits- bzw. Sicherungselemente, zum Schutz gegen unabsichtliche oder absichtliche mechanische Beschädigung sowie gegen das Eindringen von Flüssigkeiten aller Art, insbesondere gegenüber dem Eindringen von Wasser, ist die Befestigungseinrichtung 25 kastenförmig ausgebildet.

Die in den Fig. 1 und 2 dargestellte Befestigungseinrichtung 25 ist derart gestaltet, daß im angelegten Zustand des Sicherheitsgürtels 20 die Sicherheitsschließe 42 das in den Figuren nicht dataillierter gezeigte Befestigungselement 50 zum sicheren und wieder lösbaren Verbinden der Gürtelteile 21, 22 derart überdeckt, daß ein Öffnen des Sicherheitsgürtels 20 durch unbefugte Dritte nicht ohne Zerstörung der Sicherheitsschließe 42 bzw. der Befestigungseinrichtung 25 möglich ist. Alternativ kann ein mit der Befestigungseinrichtung 25 fest verbundener Abdeckteil gleichartig gestaltet sein, so daß ein Öffnen des Sicherheitsgürtels 20 durch unbefugte Dritte nicht ohne Zerstörung des Abdeckteils möglich ist.

wie insbesondere aus Fig. 2 ersichtlich, ist die Befestigungseinrichtung 25 mit der Sicherheitsschließe 42 ausgebildet, welche eine Betätigung des Befestigungselementes 50 nach Art einer insbesondere bei Sicherheitsgurten von Flugzeugsitzen üblichen Sicherheitskupplung ermöglicht. Die Sicherheitsschließe 42 ist zum Schutz des Gürtelträgers gegen unabsichtliches Öffnen bzw. gegen ein Öffnen des Sicherheitsgürtels durch unbefugte Dritte mit einem Sicherheitsmechanismus verbunden, der derart mit dem Befestigungselement 50 gekoppelt ist, daß ein beschädigungsfreies bzw. zerstörungsfreies Öffnen des Sicherheitsgürtels 20 nur durch den Träger des Sicherheitsgürtels 20 bzw. durch befugte Dritte möglich ist. Zu diesem Zwecke weist die Befestigungseinrichtung 25 die Tastatur 41 zur Eingabe eines voreinstellbaren Sicherheitscodes auf, wobei, wie aus den Figuren ersichtlich, die Tastatur 41 in die Sicherheitsschließe 42 derart integriert ist, daß sie von außen bzw. von vorn betätigbar ist. Die Sicherheitsschließe 42 ist vorteilhafterweise mit einem nicht näher in den Figuren gezeigten Sensor gekoppelt, der bei einem Versuch eines unbefugten Öffnens der Sicherheitsschließe 42, also beispielsweise durch Einwirkung von bestimmte voreinstellbare Grenzen überschreitenden mechanischen Kräften oder anderen physikalischen und/oder chemischen, auf die Beschädigung bzw. die Zerstörung des Sicherheitsgürtels 20 bzw. seiner Sicherungs- bzw. Sicherheitselemente gerichteten Eingriffe zu einer Betätigung eines oder mehrerer der Signalgeber 33, 34, 35, 36, 37 und/oder den Sender 71 des Alarmsystems 40 führt. Durch gleichzeitige optische, elektrische und/oder akustische Signalgebung durch einen oder mehreren der Signalgeber 33, 34, 35, 36, 37 kann außerdem dem unbefugten Dritten frühzeitig signalisiert werden, daß sein Eingriff automatisch erkannt und an Hilfe leistende Dritte, beispielsweise an die Polizei weitergemeldet wird. Es versteht sich, daß die Signalgeber 33, 34, 35, 36, 37, insbesondere der als Lautsprecher gestaltete Signalgeber 33 derart ausgebildet ist, daß ein über weite Strecken hörbarer Alarmton ausgesendet wird, so daß unbefugte Dritte dadurch in die Flucht geschlagen werden können.

Auf der zum Gürtelträger hin gerichteten Innenseite der Befestigungseinrichtung 25, vorzugsweise auf der Rückseite des 74 des Grundkörpers 38 oder auf der Innenseite der Sicherheitsschließe 42, ist eine Sicherheitsgravur oder ein ähnliches Personenidentifikationsmittel angebracht, mit Hilfe dessen es befugten Personen möglich ist, die Identität der den Sicherheitsgürtel tragenden Person, beispielsweise den Namen, die Adresse und/oder die Telefonnummer des Gürtelträgers oder zu benachrichtigender Dritter festzustellen. Die Befestigungseinrichtung 25 weist ferner als manuell betätigbares Sicherheitshilfselement zum Einschlagen von Glasscheiben einen Nagel oder andere geeignete, mit Spitzen versehene, leicht handhabbare und ein geringes Gewicht aufweisende Sicherheitshilfselemente auf. Diese können mit der Befestigungseinrichtung 25 lösbar oder unverlierbar, beispielsweise über ein dünnes Stahlseil verbunden sein und können in geeigneten Aufnahmeeinrichtungen 81 sicher, jedoch leicht zugänglich aufbewahrt werden.

Der Sicherheitsgürtel 20 wird vorzugsweise als Hüftgürtel, insbesondere als Hosengürtel getragen, wobei die Befestigungseinrichtung 25 und die mit ihr verbundenen Sicherheits- bzw. Sicherungsmittel im angelegten Zustand des Sicherungsgürtels 20 vorzugsweise ventral bzw. abdominal, also vor dem Bauch des Trägers des Sicherheitsgürtels 20 angeordnet sind. Diese Maßnahmen ermöglichen einen besonders günstigen Tragekomfort bei maximaler Bewegungsfreiheit des Trägers des Sicherheitsgürtels 20.

## Patentansprüche

1. Sicherheitsgürtel, insbesondere für den Personenschutz, der am menschlichen Körper anlegbar und befestigbar ist und der wenigstens zwei, das Anlegen und Abnehmen des Sicherheitsgürtels ermöglichende Gürtelteile und ein Befestigungselement zum sicheren und wiederlösbaren Verbinden der Gürtelteile aufweist, wobei der Sicherheitsgürtel (20) wenigstens eine Befestigungseinrichtung (25) für vielfältige Sicherheits- bzw. Sicherungselemente aufweist, die mit zumindest einem der Gürtelteile (21, 22) fest verbunden ist, wobei der die Befestigungseinrichtung (25) umfassende Sicherheitsgürtel (20) in seinen Abmaßen und seinem Gewicht derart ausgebildet ist, dass ein Tragen des Sicherheitsgürtels (20) auch über lange Zeiträume sowie bei Tätigkeiten des täglichen Lebens bei günstigem Tragekomfort und großer Bewegungsfreiheit möglich ist, **dadurch gekennzeichnet, dass** in der Befestigungseinrichtung zwei Seile (26, 27) gelagert sind, wobei die Seile (26, 27) hinsichtlich ihrem Querschnitt und ihrer Materialeigenschaften derart ausgebildet sind, dass ein manuelles Abrollen der Seile (26, 27) ermöglicht ist, wobei jedes Seil (26, 27) durch eine in der kastenförmig ausgebildeten Befestigungseinrichtung (25) vorgesehene öffnung (56, 57) geführt und im Inneren der Befestigungseinrichtung (25) auf Seilrollen (58, 59) gelagert ist, wobei die Drehachsen (82, 83) der Seilrollen (58, 59) normal zum Grundkörper (38) der Befestigungseinrichtung (25) ausgebildet sind und im angelegten Zustand des Sicherheitsgürtels (20) etwa normal zur Längsachse des Körpers bzw. Rumpfes des Gürtelträgers angeordnet sind.

2. Sicherheitsgürtel nach Anspruch 1, **dadurch gekennzeichnet, daß** im angelegten Zustand des Sicherheitsgürtels (20) jedem Seil (26, 27) sich unter Last ausbildende laterale Kraftübertragungspunkte (61, 62) zugeordnet sind, die einen eine stabile Lage des menschlichen Körpers ermöglichenden Abstand voneinander aufweisen.

3. Sicherheitsgürtel nach einem der Ansprüche 1 oder 2, **dadurch gekennzeichnet, daß** die Seile(26, 27) hinsichtlich ihres Querschnittes und ihrer Materialeigenschaften derart gestaltet sind, daß sie mit Sicherheit zumindest das Eigengewicht eines menschlichen Körpers ohne zu zerreißen tragen.

4. Sicherheitsgürtel nach einem der Ansprüche 1 bis 3, **dadurch gekennzeichnet, daß** die Befestigungseinrichtung (25) mit wenigstens einem mit den Seilen (26, 27) koppelbaren und vorzugsweise mit einer Schleppkupplung ausgebildeten Bremselement zum Abbremsen des unter Last auf Zug beanspruchten Seils (26, 27) bzw. des Körpers fest verbunden ist.

5. Sicherheitsgürtel nach Anspruch 4, **dadurch gekennzeichnet, daß** das Bremselement mit einem Bremskraftübertragungsmittel zum Übertragen der Bremskraft auf die Seile (26, 27) versehen ist, das mit einem Einstellmittel zur variablen Einstellung (64, 66) der Höhe der Bremskraft versehen ist.

6. Sicherheitsgürtel nach Ansprüche 5, **dadurch gekennzeichnet, daß** das Einstellmittel (64, 66) manuell, vorzugsweise mit Hilfe eines Drehgebers einstellbar ist.

7. Sicherheitsgürtel nach Anspruch 5 oder 6, **dadurch gekennzeichnet, daß** das Einstellmittel (64, 66) mit einem Mechanismus gekoppelt ist, der eine von bestimmten Körperstellungen und/oder von der Seilbeanspruchung abhängige Einstellung der Höhe der Bremskraft ermöglicht.

8. Sicherheitsgürtel nach einem der Ansprüche 1 bis 7, **dadurch gekennzeichnet, daß** die Befestigungseinrichtung (25) fest mit einer Seilrolle (58, 59) zum Auf- bzw. Abrollen des Seils (26, 27) verbunden ist, die vorzugsweise ein das Aufrollen des Seils (26, 27) unterstützendes Rückstellelement, insbesondere eine Drehfeder aufweist.

9. Sicherheitsgürtel nach einem der Ansprüche 1 bis 8, **dadurch gekennzeichnet, daß** der Sicherheitsgürtel (20) mit einem Befestigungselement (55) zur Befestigung eines Kraftübertragungsglieds verbunden und vorzugsweise derart befestigt ist, daß das Befestigungselement (55) im geschlossenen Zustand des Sicherheitsgürtels (20) in einem Bereich des Sicherheitsgürtels (20) angeordnet ist, der einem bzw. mehreren sich unter Last ausbildenden Kraftangriffspunkten (61, 62) des bzw. der Seile (26, 27) gegenüberliegt.

10. Sicherheitsgürtel nach einem der Ansprüche 1 bis 9, **dadurch gekennzeichnet, daß** die Befestigungseinrichtung (25) mit einem manuell und/oder wenigstens einem Sensor (28, 29, 31, 32) gesteuerten, vorzugsweise optische, akkustische, elektrische und/oder elektromagnetische Alarmsignale aussendenden Signalgeber (33, 34, 35, 36, 37) verbunden ist.

11. Sicherheitsgürtel nach Anspruch 10, **dadurch gekennzeichnet, daß** der Sensor (28, 29, 31, 32) zur Erfassung von Umgebungsbedingungen, wie Temperatur, Feuchte, Luftzusammensetzung und/oder Rauchgehalt ausgebildet ist.

12. Sicherheitsgürtel nach einem der Ansprüche 1 bis 11, **dadurch gekennzeichnet, daß** die Befestigungseinrichtung (25) mit einem elektrischen Alarmsystem (40) und einer autarken Stromquelle zur Versorgung des Alarmsystem (40) mit elektrischem Strom verbunden ist.

13. Sicherheitsgürtel nach Anspruch 12, **dadurch gekennzeichnet, daß** das Alarmsystem (40) mit einem Sender (71) und/oder einem Empfänger (72) gestaltet ist.

14. Sicherheitsgürtel nach Anspruch 12 oder 13, **dadurch gekennzeichnet, daß** das Alarmsystem (40) derart ausgebildet ist, daß es eine satellitengestützte Ortung des Sicherheitsgürtels (20) ermöglicht, vorzugsweise als GPS-System ausgebildet ist.

15. Sicherheitsgürtel nach einem der Ansprüche 1 bis 14, **dadurch gekennzeichnet, daß** die Befestigungseinrichtung (25) mit einem manuell betätigbaren Sicherheitshilfselement zum Einschlagen von Glasscheiben lösbar oder unverlierbar verbunden ist.

16. Sicherheitsgürtel nach einem der Ansprüche 1 bis 15, **dadurch gekennzeichnet, daß** der Sicherheitsgürtel (20) eine Aufnahmevorrichtung (73) zur Aufnahme einer vorzugsweise mit Aluminium ausgebildeten Sicherheitsdecke aufweist.

17. Sicherheitsgürtel nach einem der Ansprüche 1 bis 16, **dadurch gekennzeichnet, daß** die Befestigungseinrichtung (25) eine im angelegten Zustand des Sicherheitsgürtels (20) nicht sichtbare Sicherheitsgravur zur Personenidentifikation aufweist.

18. Sicherheitsgürtel nach wenigstens einem der Ansprüche 1 bis 17, **dadurch gekennzeichnet, daß** die Befestigungseinrichtung (25) eine Einrichtung zur drahtlosen Übermittlung von Sprache, insbesondere ein Funktelefon aufweist.

19. Sicherheitsgürtel nach Anspruch 18, **dadurch gekennzeichnet, daß** die Einrichtung zur drahtlosen Übermittlung von Sprache eine Freisprecheinrichtung umfaßt, die eine Sprachübermittlung vorzugsweise über eine Sprachsteuerung ermöglicht.

20. Sicherheitsgürtel nach wenigstens einem der Ansprüche 18 oder 19, **dadurch gekennzeichnet, daß** die Freisprecheinrichtung mit der Befestigungsvorrichtung (25) elektrisch verbindbar gestaltet ist und hierzu einen Kontaktstecker aufweist, der passend zu einem elektrischen Gegenkontaktstecker der Befestigungsvorrichtung (25) ausgebildet ist.

21. Sicherheitsgürtel nach wenigstens einem der Ansprüche 18 bis 20, **dadurch gekennzeichnet, daß** die Einrichtung zur drahtlosen Übermittlung von Sprache mit Hilfe einer vorzugsweise auf der Befestigungseinrichtung (25) bzw. einem mit dieser verbundenen Abdeckteil angeordneten Tastatur betätigbar ist.

22. Sicherheitsgürtel nach wenigstens einem der Ansprüche 18 bis 21, **dadurch gekennzeichnet, daß** die Befestigungseinrichtung (25) ein vorzugsweise separates Fach für die lösbar mit dieser verbundenen Freisprecheinrichtung aufweist.

23. Sicherheitsgürtel nach wenigstens einem der Ansprüche 1 bis 22, **dadurch gekennzeichnet, daß** die Sicherungs- bzw. Sicherheitselemente, insbesondere das Seil (26, 27), der Sensor (28, 29, 31, 32), der Signalgeber (33, 34, 35, 36, 37), das Alarmsystem (40), die Stromquelle und/oder die Sicherheitsgravur derart an der Befestigungseinrichtung (25) befestigt sind, daß sie nicht ohne Zerstörung entfernbar sind.

24. Sicherheitsgürtel nach einem der Ansprüche 1 bis 23, **dadurch gekennzeichnet, daß** die Befestigungseinrichtung (25) bzw. ein mit dieser fest verbundener Abdeckteil derart gestaltet sind, daß sie im angelegten Zustand des Sicherheitsgürtels (20) das Befestigungselement (25) derart überdecken, daß ein Öffnen des Sicherheitsgürtels (20) durch unbefugte Dritte nicht ohne Zerstörung der Befestigungseinrichtung (25) bzw. des Abdeckteils möglich ist.

25. Sicherheitsgürtel nach einem der Ansprüche 1 bis 24, **dadurch gekennzeichnet, daß** die Befestigungseinrichtung (25) bzw. der Abdeckteil mit einem mittels eines einstellbaren Sicherheitscodes betätigbaren Sicherheitsmechanismus derart mit dem Befestigungselement gekoppelt sind, daß ein Öffnen des Sicherheitsgürtels (20) nur mit Hilfe des voreingestellten Sicherheitscodes möglich ist.

26. Sicherheitsgürtel nach Anspruch 25, dadurch gekennzeichent, daß der Sichererheitscode mit Hilfe einer im angelegten Zustand des Sicherheitsgürtels (20) von außen zugänglichen, vorzugsweise auf der Befestigungseinrichtung (25) bzw. dem Abdeckteil angeordneten Tastatur (41) eingebbar ist.

27. Sicherheitsgürtel nach einem der Ansprüche 1 bis 26, **dadurch gekennzeichnet, daß** die Sicherungs- bzw. Sicherheitselemente, insbesondere das Seil (26, 27), der Sensor (28, 29, 31, 32), der Signalgeber (33, 34, 35, 36, 37), das Alarmsystem (40), die Einrichtung zur drahtlosen Übermittlung von Sprache und/oder die Tastatur (41) gegen Flüssigkeiten geschützt bzw. abgedichtet angeordnet sind.

28. Sicherheitsgürtel nach einem der Ansprüche 1 bis 27, **dadurch gekennzeichnet, daß** die Befestigungseinrichtung (25) platten- bzw. kastenförmig ausgebildet ist.

29. Sicherheitsgürtel nach einem der Ansprüche 1 bis 28, **dadurch gekennzeichnet, daß** der Sicherheitsgürtel (20) als Hüftgürtel ausgebildet ist.

30. Sicherheitsgürtel nach einem der Ansprüche 1 bis 29, **dadurch gekennzeichnet, daß** die Befestigungseinrichtung (25) und die mit Ihr fest verbundenen Sicherheits- bzw. Sicherungsmittel im angelegten Zustand des Sicherungsgürtels (20) ventral bzw. abdominal angeordnet sind.

31. Sicherheitsgürtel nach einem der Ansprüche 1 bis 30, **dadurch gekennzeichnet, daß** die Befestigungseinrichtung (25) und die mit Ihr fest verbundenen Sicherheits- bzw. Sicherungsmittel im angelegten Zustand des Sicherungsgürtels (20) eine gemeinsame Einheit (80) ausbilden.

## Claims

1. A safety belt, particularly for personal safety, which can be placed around the human body and secured thereon and which exhibits at least two belt parts making it possible to put on and take off the safety belt, and a securing element for securely and releasably joining said belt parts to each other, said safety belt (20) having at least one fastening contrivance (25) for holding diverse safety or rescue elements, which is firmly attached to at least one of the belt parts (21, 22), and the safety belt (20) comprising said fastening contrivance (25) being adapted, as regards dimensions and weight, such that it is possible to wear the safety belt (20) over long periods of time and during everyday activities with favorable comfort on the body and great freedom of movement, **characterized in that** two ropes (26, 27) are stored in the fastening contrivance, which ropes (26, 27) are such, as regards the cross-section thereof and the characteristics of the materials thereof, that manual unreeling of the ropes (26, 27) is possible, each rope (26, 27) being passed through an opening (56, 57) disposed in the box-shaped fastening contrivance (25) and stored in the interior of the fastening contrivance (25) on rope wheels (58, 59), whilst the axes of rotation (82, 83) of the rope wheels (58, 59) are normal to the base member (38) of the fastening contrivance (25) and are disposed approximately normal to the longitudinal axis of the body or trunk of the person wearing the belt when the safety belt (20) is in use.

2. A safety belt as defined in claim 1, **characterized in that** when the safety belt (20) is in use there are assigned to each rope (26, 27) lateral force-transmission points (61, 62) which form under load and which are adequately spaced from each other so as to give a stable position of the human body.

3. A safety belt as defined in claim 1 or claim 2, **characterized in that** the ropes (26, 27) are such, as regards the cross-section thereof and the characteristics of the materials thereof, that they can safely bear at least the weight of a human body without breaking.

4. A safety belt as defined in any one of claims 1 to 3, **characterized in that** the fastening contrivance (25) is firmly attached to at least one braking element capable of being coupled to the ropes (26, 27) and preferably provided with a drag clutch to decelerate the rope (26, 27) stressed under load or the body.

5. A safety belt as defined in claim 4, **characterized in that** the braking element is provided with a brake power transmission device for transferring the brake power to the ropes (26, 27), which is provided with adjusting means for variably setting (64, 66) the magnitude of the brake power.

6. A safety belt as defined in claim 5, **characterized in that** said adjusting means (64, 66) can be set manually, preferably with the aid of a rotary adjuster.

7. A safety belt as defined in claim 5 or claim 6, **characterized in that** the adjusting means (64, 66) are coupled to a mechanism which adjusts the magnitude of the brake power according to certain positions of the body and/or of the load on the rope.

8. A safety belt as defined in any one of claims 1 to 7, **characterized in that** the fastening contrivance (25) is firmly attached to a rope wheel (58, 59) for winding or unwinding the rope (26, 27), which rope wheel preferably exhibits a reset element, particularly a torsion spring, for assisting rewinding of the rope (26, 27).

9. A safety belt as defined in any one of claims 1 to 8, **characterized in that** the safety belt (20) is linked to a securing element (55) for attachment of a force-transferring member and is preferably fixed in such a manner that the securing element (55) is disposed, in the closed state of the safety belt (20), in an area of the safety belt (20) which is opposite to one or more points of force application (61, 62) of the rope(s) (26, 27) as are formed under load.

10. A safety belt as defined in any one of claims 1 to 9, **characterized in that** the fastening contrivance (25) is connected to a manually controlled and/or at least one sensor-(28, 29, 31, 32)-controlled, preferably optical, acoustic, electrical, and/or electromagnetic signal generator (33, 34, 35, 36, 37) capable of emitting emergency signals.

11. A safety belt as defined in claim 10, **characterized in that** said sensor (28, 29, 31, 32) is adapted for the acquisition of environmental conditions, such as temperature, moisture, composition of the air, and/or smoke content.

12. A safety belt as defined in any one of claims 1 to 11, **characterized in that** the fastening contrivance (25) is connected to an electrical alarm system (40) and to a self-sufficient power source for supplying the alarm system (40) with electric current.

13. A safety belt as defined in claim 12, **characterized in that** the alarm system (40) is provided with a transmitter (71) and/or a receiver (72).

14. A safety belt as defined in claim 12 or claim 13, **characterized in that** the alarm system (40) is such that it allows for satellite-aided location of the safety belt (20), and is preferably in the form of a GPS system.

15. A safety belt as defined in any one of claims 1 to 14, **characterized in that** the fastening contrivance (25) is releasably or firmly attached to a manually actuatable rescue element for breaking panes of glass.

16. A safety belt as defined in any one of claims 1 to 15, **characterized in that** the safety belt (20) exhibits accomodation means (73) for the accommodation of a safety blanket preferably comprising aluminum.

17. A safety belt as defined in any one of claims 1 to 16, **characterized in that** the fastening contrivance (25) exhibits a safety engraving for personal identification, which is not visible when the safety belt (20) is in use.

18. A safety belt as defined in at least one of claims 1 to 17, **characterized in that** the fastening contrivance (25) exhibits a radio voice-transmission installation, particularly a radiophone.

19. A safety belt as defined in claim 18, **characterized in that** the radio voice-trans-mission installation comprises a non-hand-held radio voice-transmission system which allows for voice-transmission preferably with the aid of voice control means.

20. A safety belt as defined in at least one of claims 18 and 19, **characterized in that** the non-hand-held radio voice-transmission system can be electrically connected to the fastening contrivance (25) and has, to this end, a contact plug which is adapted to fit into an electrical contact socket on the fastening contrivance (25).

21. A safety belt as defined in at least one of claims 18 to 20, **characterized in that** the radio voice-transmission installation is capable of being actuated with the aid of a keypad preferably disposed on the fastening contrivance (25) or a covering element connected thereto.

22. A safety belt as defined in at least one of claims 20 to 21, **characterized in that** the fastening contrivance (25) exhibits a preferably separate compartment for the non-hand-held radio voice-transmission system releasable connected thereto.

23. A safety belt as defined in at least one of claims 1 to 22, **characterized in that** the safety or rescue elements, particularly the rope (26, 27), the sensor (28, 29, 31, 32), the signal generator (33, 34, 35, 36, 37), the alarm system (40), the power source, and/or the safety engraving are fixed to the fastening contrivance (25) in such a manner that they cannot be non-destructively removed therefrom.

24. A safety belt as defined in any one of claims 1 to 23, **characterized in that** the fastening contrivance (25) or a covering element firmly attached thereto are designed such that they cover the fastening contrivance (25), when the safety belt (20) is in use, such that opening of the safety belt (20) by an unauthorized third party is not possible without destruction of the fastening contrivance (25) or the covering element.

25. A safety belt as defined in any one of claims 1 to 24, **characterized in that** the fastening contrivance (25) or the covering element are coupled to the securing element via a safety mechanism that is capable of being actuated by way of a predetermined safety code in such a manner with that opening of the safety belt (20) is only possible using the preset safety code.

26. A safety belt as defined in claim 25, **characterized in that** the safety code is capable of being keyed in with the aid of a keypad which is accessible, when the safety belt (20) is in use, only from the outside and is preferably disposed on the fastening contrivance (25) or the covering element.

27. A safety belt as defined in any one of claims 1 to 26, **characterized in that** the safety or rescue elements, particularly the rope (26, 27), the sensor (28, 29, 31, 32), the signal generator (33, 34, 35, 36, 37), the alarm system (40), the radio voice-transmission installation, and/or the keypad (41) are protected from, or sealed against, liquids.

28. A safety belt as defined in any one of claims 1 to 27, **characterized in that** the fastening contrivance is flat or box-shaped.

29. A safety belt as defined in any one of claims 1 to 28, **characterized in that** the safety belt (20) is in the form of a hip belt.

30. A safety belt as defined in any one of claims 1 to 29, **characterized in that** the fastening contrivance (25) and the safety or rescue means that are fixed thereto are disposed, when the safety belt (20) is in use, in a ventral or abdominal position.

31. A safety belt as defined in any one of claims 1 to 30, **characterized in that** the fastening contrivance (25) and the safety or rescue means that are fixed thereto form a common unit (80) when the safety belt (20) is in use.

## Revendications

1. Ceinture de sécurité, notamment pour la protection de personnes, susceptible d'être mise et fixée au corps humain et présentant au moins deux portions de ceinture permettant la mise et l'enlèvement de la ceinture de sécurité ainsi qu'un élément de fixation servant à l'accouplement sûr et détachable des portions de ceinture l'une à l'autre, la ceinture de sécurité (20) présentant au moins un dispositif d'attache (25) pour de divers éléments de sécurité et de protection, connecté fixement à au moins l'une des portions de ceinture (21, 22), la ceinture de sécurité (20) comprenant le dispositif d'attache (25) étant conçue quant à ses dimensions et son poids de telle sorte qu'elle peut être portée même pendant des durées longues et avec un confort favorable aux activités de la vie quotidienne et avec une grande liberté de mouvement,
**caractérisée en ce que** deux cordes (26, 27) sont logées dans le dispositif d'attache, les cordes (26, 27) possèdant une section transversale et des propriétés physiques telles qu'elles permettent l'enbobinage et le débobinage manuels des cordes (26, 27), chaque corde (26, 27) passant par une ouverture (56, 57) prévue dans le dispositif d'attache (25) réalisé en forme de caisse, et est disposée sur les poulies à corde (58, 59), à l'intérieur du dispositif d'attache (25), les axes de rotation (82, 83) des poulies à corde (58, 59) étant formés normalement au corps de base (38) du dispositif d'attache (25), c. à d. disposés, en état mis de la ceinture de sécurité (20), à peu près normalement à l'axe longitudinal du corps de la personne portant la ceinture.

2. Ceinture de sécurité selon la revendication 1,
**caractérisée en ce que** en état mis de la ceinture de sécurité (20), chaque corde (26, 27) présente des points de transmission de force latéraux (61, 62) se formant sous charge et prévus à des distances, les uns des autres, permettant une position stable du corps humain.

3. Ceinture de sécurité selon l'une quelconque des revendications 1 ou 2,
**caractérisée en ce que** les cordes (26, 27) possèdent des sections transversales et des propriétés physiques telles qu'elles supportent sûrement au moins le poids propre d'un corps humain sans se déchirer.

4. Ceinture de sécurité selon l'une quelconque des revendications 1 à 3,
**caractérisée en ce que** le dispositif d'attache (25) est connecté fixement à un élément de freinage susceptible d'être accouplé aux cordes (26, 27) et de préférence muni d'un dispositif d'accouplement de freinage, pour freiner la corde (26, 27) soumise, sous charge, à un effort de traction et donc le corps.

5. Ceinture de sécurité selon la revendication 4,
**caractérisée en ce que** l'élément de freinage est équipé d'un dispositif de transmission de force de freinage qui transmet la force de freinage sur les cordes (26, 27) et qui est muni d'un limiteur-régleur (64, 66) pour régler de façon variable la force de freinage.

6. Ceinture de sécurité selon la revendication 5,
**caractérisée en ce que** le limiteur-régleur (64, 66) peut être réglé manuellement, de préférence au moyen d'un résolveur.

7. Ceinture de sécurité selon les revendications 5 ou 6,
**caractérisée en ce que** le limiteur-régleur (64, 66) est couplé à un mécanisme permettant un réglage de la force de freinage dépendant de certains positions du corps et/ou de la contrainte de la corde.

8. Ceinture de sécurité selon l'une quelconque des revendications 1 à 7,
**caractérisée en ce que** le dispositif d'attache (25) est connecté fixement à une poulie à corde (58, 59) pour l'enroulement et le déroulement de la corde (26, 27) présentant de préférence un élément de rappel supportant l'enroulement de la corde (26, 27), en particulier un ressort de torsion.

9. Ceinture de sécurité selon l'une quelconque des revendications 1 à 8,
**caractérisée en ce que** la ceinture de sécurité (20) est connectée fixement à un élément de fixation (55) pour la fixation d'un membre de transmission de force et est fixée de préférence de telle manière que, à l'état fermé de la ceinture de sécurité (20), l'élément de fixation (55) est disposé dans une zone de la ceinture de sécurité (20) faisant face à un ou plusieurs points d'application de force (61, 62) se constituant sous charge dans les cordes (26, 27).

10. Ceinture de sécurité selon l'une quelconque des revendications 1 à 8,
**caractérisée en ce que** le dispositif d'attache (25) est connecté fixement à un poste transmetteur des signaux (33, 34, 35, 36, 37) émettant des signaux d'alarme de préférence visuels, acoustiques, électriques et/ou électromagnétiques et commandé à main et/ou par au moins un capteur (28, 29, 31, 32).

11. Ceinture de sécurité selon la revendication 10,
**caractérisée en ce que** le capteur (28, 29, 31, 32) est réalisé pour la détection de conditions ambiantes comme de la température, de l'humidité de l'air, de la composition de l'air et/ou de la teneur en fumée.

12. Ceinture de sécurité selon l'une quelconque des revendications 1 à 11,
**caractérisée en ce que** le dispositif d'attache (25) est connecté fixement à un système d'alarme électrique (40) et à une source de courant électrique indépendante pour l'alimentation du système d'alarme (40) en courant électrique.

13. Ceinture de sécurité selon la revendication 10,
**caractérisée en ce que** le système d'alarme (40) est muni d'un émetteur (71) et/ou d'un récepteur (72).

14. Ceinture de sécurité selon les revendications 12 ou 13,
**caractérisée en ce que** le système d'alarme (40) est conçu de façon à permettre une localisation par satellite de la ceinture de sécurité (20), et est de préférence réalisé en forme d'un système GPS.

15. Ceinture de sécurité selon l'une quelconque des revendications 1 à 14,
**caractérisée en ce que** le dispositif d'attache (25) est connecté, de façon détachable ou imperdable, à un élément de secour à actionnement manuel pour casser des vitres.

16. Ceinture de sécurité selon l'une quelconque des revendications 1 à 15,
**caractérisée en ce que** la ceinture de sécurité (20) présente un dispositif de logement (73) pour la réception d'une couverture de sécurité de préférence réalisée avec de l'aluminium.

17. Ceinture de sécurité selon l'une quelconque des revendications 1 à 16,
**caractérisée en ce que** le dispositif d'attache (25) présente une gravure de sécurité non visible en état monté de la ceinture de sécurité (20), servant à l'identification de la personne.

18. Ceinture de sécurité selon l'une quelconque des revendications 1 à 17,
**caractérisée en ce que** le dispositif d'attache (25) présente un poste de transmission de la voix par radio, notamment un radiotéléphone.

19. Ceinture de sécurité selon la revendication 18,
**caractérisée en ce que** le poste de transmission de la voix par radio comprend un dispositif téléphonique à mains libres permettant la transmission de la voix de préférence au moyen d'une commande par la voix.

20. Ceinture de sécurité selon au moins une des revendications 18 ou 19,
**caractérisée en ce que** le dispositif téléphonique à mains libres est prévu pour être connecté électriquement au dispositif d'attache (25), et à ce but présente une fiche de raccordement adaptée à une contre-fiche de raccordement électrique du dispositif d'attache (25).

21. Ceinture de sécurité selon au moins une des revendications 18 à 20,
**caractérisée en ce que** le poste de transmission de la voix par radio peut être actionné au moyen d'un clavier disposé de préférence sur le dispositif d'attache (25) ou sur un élément de recouvrement y attaché.

22. Ceinture de sécurité selon au moins une des revendications 20 à 21,
**caractérisée en ce que** le dispositif d'attache (25) comporte une case, de préférence séparée, pour recevoir le dispositif téléphonique à mains libres connecté de façon détachable avec celui-là.

23. Ceinture de sécurité selon au moins une des revendications 1 à 22,
**caractérisée en ce que** les éléments de sécurité et de protection, notamment la corde (26, 27), le capteur (28, 29, 31, 32), le poste transmetteur des signaux (33, 34, 35, 36, 37), le système d'alarme (40), la source de courant électrique et/ou la gravure de sécurité sont attachés sur le dispositif d'attache (25) de façon qu'ils ne peuvent pas être enlevés sans les rompre.

24. Ceinture de sécurité selon l'une quelconque des revendications 1 à 23,
**caractérisée en ce que** le dispositif d'attache (25) ou un élément de recouvrement y attaché sont conçu de manière qu'ils recouvrent l'élément de fixation (55), quand la ceinture de sécurité (20) a été mise, de façon que la ceinture de sécurité (20) ne peut pas être ouverte par des tiers non autorisés sans détruire le dispositif d'attache (25) ou l'élément de recouvrement.

25. Ceinture de sécurité selon l'une quelconque des revendications 1 à 24,
**caractérisée en ce que** le dispositif d'attache (25) ou l'élément de recouvrement sont couplés, par un mécanisme de sécurité qui peut être actionné au moyen d'un code redondant, à l'élément de fixation (55), de façon que la ceinture de sécurité (20) ne peut pas être ouverte qu'à l'aide du code redondant présélectionné.

26. Ceinture de sécurité selon la revendication 25,
**caractérisée en ce que** le code redondant peut être introduit au moyen d'un clavier (41) disposé de préférence sur le dispositif d'attache (25) ou l'élément de recouvrement et accessible de l'extérieur quand la ceinture de sécurité (20) a été mise.

27. Ceinture de sécurité selon l'une quelconque des revendications 1 à 26,
**caractérisée en ce que** les éléments de sécurité et de protection, notamment la corde (26, 27), le capteur (28, 29, 31, 32), le poste transmetteur des signaux (33, 34, 35, 36, 37), le système d'alarme (40),, le poste de transmission de la voix par radio et/ou le clavier (41), sont disposés de façon protégée, c. à d. étanche aux liquides.

28. Ceinture de sécurité selon l'une quelconque des revendications 1 à 27,
**caractérisée en ce que** le dispositif d'attache (25) est conçu en forme de panneau ou de caisse.

29. Ceinture de sécurité selon l'une quelconque des revendications 1 à 28,
**caractérisée en ce que** la ceinture de sécurité (20) est une ceinture à porter sur la hanche.

30. Ceinture de sécurité selon l'une quelconque des revendications 1 à 29,
**caractérisée en ce que** la ceinture de sécurité (20) en état porté présente le dispositif d'attache (25) et les éléments de sécurité et de protection y attachés fermement disposés sur le ventre.

31. Ceinture de sécurité selon l'une quelconque des revendications 1 à 30,
**caractérisée en ce que** le dispositif d'attache (25) et les éléments de sécurité et de protection y attachés fermement forment une unité (80), quand la ceinture de sécurité est mise (20).
